# EUROPÄISCHE PATENTSCHRIFT

(11) **EP 3 967 123 B1**
(45) Veröffentlichungstag und Bekanntmachung des Hinweises auf die Patenterteilung: **22.10.2025**
(21) Anmeldenummer: 21194467.3
(22) Anmeldetag: 02.09.2021
(51) Int. Cl.: A01D 34/535, A01D 43/12, A01B 39/08

(54) **VORRICHTUNG UND VERFAHREN ZUM BEARBEITEN VON BODENBEWUCHSFLÄCHEN**
DEVICE AND METHOD OF PROCESSING GROUND VEGETATION
DISPOSITIF ET PROCÉDÉ DE TRAITEMENT DES SURFACES DE SALISSURE DU SOL

(30) Priorität: 09.09.2020 DE 102020123519
(43) Veröffentlichungstag der Anmeldung: 16.03.2022
(73) Patentinhaber: Müthing GmbH & Co. KG, 59955 Winterberg (DE)
(72) Erfinder: Zurhake, Christian, 59581 Niederbergheim (DE); Müthing, Michael, 59955 Winterberg (DE); Plaßmann, Björn, 59510 Lippetal (DE)
(74) Vertreter: Lichti - Patentanwälte Partnerschaft mbB

(56) Entgegenhaltungen:
- EP-A1- 3 138 376
- US-A- 2 669 173
- US-A- 2 694 969
- US-A1- 2014 166 320

## Beschreibung

Die Erfindung betrifft eine Vorrichtung zur Bearbeitung von Bodenbewuchs mit einer Mulcheinrichtung und ein Verfahren zum Bearbeiten von Bodenbewuchs mit Mulchen.

Gattungsgemäße Vorrichtungen wie zur land- und forstwirtschaftlichen Bearbeitung oder dgl. von Bodenbewuchs sind insbesondere als Mulchervorrichtungen ausgebildet, bei denen die Bearbeitung darin besteht, dass auf dem Boden wachsende Grünmasse wie Bodenbewuchs abgeschnitten, zerkleinert und wieder auf dem Boden abgelegt wird. Derartige Mulchervorrichtungen haben als Trennwerkzeug zum Abtrennen von Grün- oder Biomasse von den am Boden verbleibenden Pflanzenteilen hierzu einen Schlegel aufweisenden Rotor. Mittels der Schlegel wird Grünmasse oberhalb des Bodens, auf dem sich die Arbeitsvorrichtung bewegt, abgetrennt, wobei eine bodennahe radial gerichtete und radial verstellbare Schneideinrichtung unterstützend wirken kann. Die abgetrennte Grünmasse wird als Mulchgut um einen Teilumfang des Rotors gefördert und dabei gegen vorrichtungs- bzw. gehäusefeste Gegenmesser geschleudert bzw. bewegt. Die Grünmasse wird durch das Zusammenwirken der Schlegel und der Gegenmesser weiter zerkleinert. Anschließend wird die Grünmasse als Mulchgut in Fahrtrichtung hinter dem Rotor abgelegt, wobei das Ablegen durch ein Leitblech unmittelbar hinter dem Rotor oder aber bei veränderter Stellung des Leitbleches in größerer Entfernung, insbesondere hinter Stützrädern oder Stützwalzen erfolgen kann.

Derartige Arbeitsvorrichtungen sind insbesondere in den folgenden Druckschriften beschrieben, auf die ausdrücklich Bezug genommen wird: EP 1 782 660 A1, EP 2 997 802 A2, EP 3 479 677 A1 und EP 3 449 710 A1.

Die Bodenverbesserung, Bodenaktivierung, Humusanreicherung und Nutzung von biologischen Nährstoffkreisläufen durch Mulchen von Bodenbewuchs, Grünmassen wie z.B. Zwischenfrüchten und von Ernteresten und Biomassen generell gewinnt insbesondere in der Landwirtschaft, vor allem in naturnaher, regenerativer und biologischer, aber auch in integrativer Landbewirtschaftung sowie in der Grünflächen- und Brachflächenpflege immer größere Bedeutung. Hierdurch soll der Einsatz von chemischen Pflanzenschutzmitteln zur Reduzierung von Schädlingsbefall der Nutzpflanzen vermindert oder sogar vermieden und der Einsatz von künstlichem Mineraldünger reduziert werden und insgesamt eine Steigerung der natürlichen Bodenaktivität und Resilienz der Böden sowie der Flora und Fauna erzielt werden. Dies dient im Ergebnis auch dem Erhalt bzw. der Steigerung der Biodiversität und der allgemeinen Resilienz dieser Naturräume.

Bei den für diese Zwecke eingesetzten Mulchervorrichtungen ist es bisher ausschließlich vorgesehen, den Bodenbewuchs über die gesamte Fläche der gesamten Arbeitsbreite eines solchen Arbeitsgerätes einheitlich und ganzflächig abzutrennen und zu bearbeiten. Dadurch ist eine partielle Bearbeitung des Bodenbewuchses z.B. nur in Zwischenräumen zwischen Saat- und Wachstumsreihen von Reihenkulturen von Nutzpflanzen oder in Streifenbearbeitung mit entsprechender Aussparung von Kultur-Pflanzenreihen o.ä. nicht möglich.

Dadurch bedingt ist bisher auch ausgeschlossen, eine Mulchervorrichtung mit ebenfalls wieder partiell arbeitenden Elementen zu versehen, die in einem kombinierten Arbeitsgang mit der Mulcharbeit entweder durch eine flache in den Boden eingreifende Bearbeitung von Biomasse unbedeckte (schwarze) Saatstreifen erzeugen wie Reihenfräselemente und/oder Reihen-Grubber- oder Reihenhackelemente oder Breitschlitzwerkzeuge oder mit Elementen, die diese Saatstreifen zu einem späteren Zeitpunkt zur Unkrautbekämpfung mit leichtem Bodeneingriff pflegen wie Hackstriegel und/oder Hackelemente, die so ausgeprägt sind, dass sie die aufgekeimten und im Wachstum befindlichen Kulturpflanzen nicht beeinträchtigen.

Bei den für diese Zwecke eingesetzten Mulchervorrichtungen ist es bisher zumindest auch sehr mühsam, weitere separate Arbeitsgänge mit anderen Funktionalitäten und entsprechenden separaten Geräten in einem Arbeitsgang vorzusehen bzw. durchzuführen. Dies gilt insbesondere für das Aus- und Einbringen von Dünger in flüssiger oder fester Form wie Gülle, Harnstoff oder Düngerpellets, das Einsäen von körnigem Saatgut, das Ausbringen von anderen natürlichen Wirkstoffen oder auch, soweit notwendig, von chemischen Pflanzenschutzmitteln sowohl in flüssiger als auch fester Form und in Mischungen derselben.

Die US 2,694,969 zeigt einen Kultivator in Form rotierender Mulchgeräte für Reihenkulturen mit einer langgestreckten, drehbaren Antriebswelle, einem Paar von zusammenwirkenden zylindrischen Mulchkörpern, die auf der Antriebswelle montiert sind. Jedes der Mulchgeräte weist eine Vielzahl von peripheren Klingenelementen zum Mulchen auf und, um den Boden mit hoher Geschwindigkeit nach hinten zu schleudern. Eine umschließende Abschirmung umschließt eng jedes der Mulchgeräte, um einen Teil des ausgestoßenen Bodens abzulenken. Jede der Abschirmungen weist ein Paar seitlich beabstandeter Seitenwände auf, die von einer oberen Wand überspannt werden und diese gegenseitig eine Ablenkplatte tragen, die sich vertikal nach unten und seitlich einer Seite jeder der Abschirmungen erstreckt. Jede Ablenkplatte ist länglich und unter einem Teil des entsprechenden zylindrischen Mulchers gebogen.

Die US 2,669,173 zeigt eine Mulchvorrichtung bestehend aus einer Vielzahl von Mulchsätzen, die auf einer drehbaren gemeinsamen Welle getragen sind. Die Mulchsätze sind entlang der Welle beabstandet, um eine Reihe von Erntereihen zu überspannen. Jeder Satz weist eine ausreichende Länge auf, um die Breite zwischen benachbarten Erntereihen zu überspannen. Jeder Satz enthält eine Vielzahl von Messern, die an den Rändern von einer inneren und zwei äußeren Scheiben befestigt sind. Die innere Scheibe hat einen größeren Durchmesser als die äußeren Scheiben, um die Messer in einem schrägen Winkel zur Welle anzuordnen. Die Umfänge der Scheiben sind abgeschrägt und die Messer sind so angeordnet, dass sie flach liegen, so dass sie sich von der inneren Scheibe zu den äußeren Scheiben neigen. Jede der äußeren Scheiben ist einstellbar auf der Welle montiert, um Bewegung relativ zu dieser zu ermöglichen.

Die EP 3 138 376 A1 zeigt einen Unkrautrotor insbesondere für den landwirtschaftlichen Einsatz mit einer rohrförmigen Welle, die sich entlang einer Längsachse erstreckt und angetrieben ist, um sich um die Längsachse zu drehen. Die Welle hat eine zylindrische Struktur und ein auswechselbares Schutzrohr, das um die zylindrische Struktur herum angeordnet und so konfiguriert ist, dass es auf dem Boden gleitet. Eine Vielzahl von Arbeitsdrähten ist jeweils in der röhrenförmigen Welle untergebracht und konfiguriert, um zwei jeweilige Endabschnitte durch zwei jeweilige Öffnungen der zylindrischen Wand aus der Rohrwelle anzuordnen.

Die US 2014/166320 A1 zeigt eine nicht gattungsgemäße Bodenbearbeitungsvorrichtung und ein Verfahren zum Bearbeiten von Böden, die die Verwendung einer Rotationswelle mit einer Anzahl von Schneidanordnungen umfassen, die an voneinander beabstandeten Stellen auf der Welle angeordnet sind, wobei jede Schneidanordnung eine Vielzahl von Klingen aufweist, die sich drehen, wenn sich die Rotationswelle dreht, um so eine Vielzahl von beabstandeten Gräben mit demselben Abstand wie der Abstand der Klingen und einer Breite zu formen, die durch die Breite der Klingen bestimmt ist. Wenn die Klingen den Graben graben, wird der von den Klingen bearbeitete Boden granuliert und von den sich drehenden Klingen herumgeschleudert, so dass ein Teil der Erde in den Graben zurückfällt und ein Teil entlang der Peripherie des Grabens fällt, um Reihen von belüfteten Bodenstreuern zu bilden, die einen verstärkten Wachstum von Pflanzen oder Samen in dem Graben und entlang der Kante des Grabens fördern, um den Weideertrag durch die Gräben zu verbessern.

Der Erfindung liegt die Aufgabe zugrunde, eine gattungsgemäße Vorrichtung und ein Verfahren dahingehend weiterzubilden, dass sie die eingangs beschriebene Bearbeitung von Bodenbewuchs zwischen Reihen von Nutzpflanzen ermöglichen und insbesondere weitere Funktionalitäten aufweisen, insbesondere bei Nutzpflanzen der Direktsaat.

Erfindungsgemäß wird die genannte Aufgabe mit einer Bodenbearbeitungsvorrichtung mit einer Mulcheinrichtung nach dem Anspruch 1 gelöst.

Zur Lösung der genannten Aufgabe sieht die Erfindung weiter ein Verfahren nach dem Anspruch 14 vor.

Weitere bevorzugte Ausführungsformen sind durch die abhängigen Ansprüche definiert.

Durch die Anordnung der mit einer geschlossenen Oberseite versehenen nach unten offenen Kanälen im zweiten axialen Bereich der erfindungsgemäßen Vorrichtung, der beim Einsatz über die Nutz- oder Kulturpflanzen verfährt, werden diese optimal geschützt und gegenüber dem ersten zu mulchenden Bereich abgeschirmt. Derart wird durch die Erfindung wird eine nachhaltige Grünflächenbearbeitung hinsichtlich Bodenschutz, Bodenfruchtbarkeit und Biodiversität erreicht. Die Erfindung ermöglicht insbesondere auch das Anlegen und Pflegen von Saatstreifen für Nutzpflanzen sowie das Ausbringen von flüssigen Gütern und/oder körnigen Stoffen, wie Saatgut, Dünger, natürlichen oder chemischen Pflanzenschutzmitteln und anderen Stoffen. Die natürliche Bodenbeschaffenheit, Struktur, Fruchtbarkeit und Gesundheit des Lebensraums Boden und seine Biodiversität werden bestmöglich gefördert; das natürliche Gleichgewicht von land- und forstwirtschaftlichen Böden sowie Grünflächen aller Art wird gestärkt. Hierdurch können sich Schadorganismen weniger stark ausbreiten, was den Einsatz von chemischen Pflanzenschutzmitteln, Herbiziden und/oder Insektiziden reduziert bzw. unnötig macht. Dennoch wird durch das erfindungsgemäße Verfahren selbst bei Anlage von Saatstreifen durch den sehr flachen Bodeneingriff der Boden selbst nicht aufgebrochen, so dass die Kultur- oder Nutzpflanzen in Direktsaat ausgebracht werden können; hierdurch wird insbesondere Lichtreiz, den viele Unkräuter für die Keimung benötigen, verhindert und so vorbeugend das Vorkommen von Unkräutern reduziert. Wie schon gesagt, können durch die erfindungsgemäße Vorrichtung und das erfindungsgemäße Verfahren das aktive und passive Aufbrechen der Böden selbst, wie durch Grubber, Pflüge und tiefwirkende Hacken vermieden werden, die zu Bodenverdichtungen, Abnahme natürlicher Bodenbeschaffenheit und -aktivität, geringerer Wasseraufnahme- und Speicherkapazität sowie zur Zunahme von Erosion und massiver Störung natürlicher Kreislaufprozesse führen würden.

Die Erfindung geht aus von in Dauerbegrünung oder Zwischenfruchtbeständen in Direktsaat oder in Streifensaat aufgebrachten Reihen von Kultur- oder Nutzpflanzen, zwischen denen eine biologisch wirksame Dauerbegrünung, wie Klee, vorgesehen ist, welche ebenfalls den Druck von Unkraut deutlich reduziert, da zum einen der Wurzelraum und zum anderen der Aufwuchsraum bereits durch die Pflanzen der Dauerbegrünung belegt ist. Unkräuter können sich so überwiegend nicht entwickeln und nicht wachsen. Hierdurch wird aufgrund des Einsatzes der erfindungsgemäßen Vorrichtung und der Durchführung des erfindungsgemäßen Verfahrens der Einsatz von Herbiziden reduziert bzw. kann entfallen, da weniger Unkräuter auflaufen und Schadschwellen zur Regulierung solcher nicht erreicht werden.

Die biologisch wirksame Dauerbegründung bietet, ebenso wie der Boden in seiner natürlichen Beschaffenheit, der mit der erfindungsgemäßen Vorrichtung und durch das erfindungsgemä-βe Verfahren, wie gesagt, nicht aufgebrochen wird, Lebensraum für Nützlinge, welche so gefördert werden, sich unbeschadet entwickeln und in der Diversität ebenfalls für gewisse phytosanitäre Effekte sorgen. Außerdem entstehen durch die Mulchstreifen zwischen den Reihen der Hauptkultur und die entsprechenden Zusammensetzungen der Dauerbegrünung wie Klee, niedrig wachsende Kräuter, Blumen, Pflanzenmischungen etc. lichtoffene, reichhaltige Nahrungs- und Aufenthaltsflächen für Insekten und Vögel, was ebenfalls zur Stärkung der Biodiversität in vielerlei Hinsicht beiträgt und durch die Intensivbewirtschaftung der letzten Jahrzehnte verloren gegangene Lebensräume für die Fauna zurückgewinnt bei gleichzeitigem Erhalt oder sogar Verbesserung für das Wachstum und den Ertrag der Nutzpflanzen. Darüber hinaus reduzieren die Mulchstreifen Bodenerosionen durch Wind und Wasser, erhöhen die Bodentragfähigkeit und vermeiden auf diese Weise auch Bodenverdichtungen.

Durch die erfindungsgemäße Vorrichtung und das erfindungsgemäße Verfahren werden die Streifen der genannten Dauerbegrünung zwischen den Kultur- oder Nutzpflanzenreihen gemulcht, wodurch die Dauerbegrünung nicht zur Konkurrenz für die genannte Hauptkultur werden kann. Damit wird das Konkurrenzpotenzial der Dauerbegrünung gegenüber den Nutzpflanzen zielgerichtet mechanisch reduziert. Gleichzeitig werden noch aufgelaufene Unkräuter ebenfalls gezielt und frühzeitig vor der Reife mechanisch bekämpft und auch ein Bodensamenvorrat von Unkräutern zusätzlich weiter verringert, was ebenfalls als Ersatz von chemischen Pflanzenschutzmaßnahmen, wie Herbizideinsatz, fungiert. Dieser Effekt kann durch einen Einsatz der vorgesehenen Unkraut-Regulierungselemente, wie Striegelelemente in den Nutzpflanzenbereichen zusätzlich verstärkt und intensiviert werden. Zerkleinertes Mulchmaterial wird gezielt zwischen den Nutzpflanzenreihen abgelegt. Hierdurch wird ein schneller Abbau und eine phytosanitär wirkende Umsetzung der Biomasse durch Bodenorganismen auch während der Wachstumsphase der Hauptkultur ermöglicht. Zusätzlich erfolgt eine gezielte biologische Nährstofffreisetzung an den Nutzpflanzen selbst, was zu einer Reduzierung von Zusatzdüngung führt. Darüber hinaus bildet das Mulchmaterial direkt an der Reihe der Nutzpflanzen eine physikalische Barriere für das Auflaufen von Unkräutern in den Reihen selbst.

Gemäß einer ersten bevorzugten Ausgestaltung der erfindungsgemäßen Vorrichtung ist vorgesehen, dass über den Umfang hin in den ersten Bereichen angeordnete Trennwerkzeuge, wie Schlegel oder Trennmesser sich in Richtung der Haupt-Querachse überlappen; hierdurch wird im ersten Bereich über die gesamte Breite der zur mulchenden Biomasse zwischen den Reihen der Nutz- oder Kulturpflanzen eine optimale Abtrennung und Zerkleinerung der Grünmasse bewirkt.

In einer weiteren äußerst bevorzugten Ausgestaltung ist vorgesehen, dass erste und zweite Bereiche sich in Richtung der Haupt-Querachse abwechseln.

In bevorzugter Ausgestaltung sind die Kanäle in ihrem vorderen Bereich an einer parallel zur Haupt-Querachse verlaufenden vorrichtungsfesten Schwenkachse angelenkt. Hierdurch werden die Kanäle in ihrem vorderen Bereich an der erfindungsgemäßen Vorrichtung vorrichtungs- bzw. gehäusefest gehalten, während sie an ihrem in Bewegungsrichtung rückwärtigen Ende auf dem Boden aufliegen und über diesen gezogen werden und knapp oberhalb der Bodenoberfläche geführt werden und hierdurch die Nutz- oder Kulturpflanzen optimal schützen.

Um die Nutz- oder Kulturpflanzen sicher über ihre gesamte Höhe in die Kanäle hineinzubewegen, sieht eine Weiterbildung vor, dass die Kanäle von ihrem vorderen Bereich (Einlaufbereich) aus sich zu ihren freien Enden hin schräg nach außen erstreckende Einlaufbleche aufweisen. Darüber hinaus kann in bevorzugter Ausgestaltung vorgesehen sein, dass die Oberseite der Kanäle in einem vorderen Bereich und/oder einem rückwärtigen Bereich von einem mittleren Bereich aus schräg nach oben verlaufen. Durch erstere Schräge werden die Nutzpflanzen auch bei größerer Höhe sanft in die Kanäle geführt, während eine gegebenenfalls rückwärtige Anschrägung dazu dient, auf den Kanälen aus den Zwischenbereichen zwischen diesen abgeworfenes Mulchgut in den Zwischenraum zwischen den Nutzpflanzen, also den Mulchbereich zurückzuführen. Dies wird bevorzugt dadurch unterstützt, dass sich auf einem rückwärtigen Bereich der Kanäle ein Satteldach befindet.

Eine äußerst bevorzugte Weiterbildung der erfindungsgemäßen Vorrichtung sieht vor, dass unmittelbar vor und/oder hinter dem Rotor mindestens eine erste Applikationseinrichtung, insbesondere in Form eines Applikationsbalkens zum Ausbringen von flüssigem und/oder festem, wie körnigem Ausbringgut angeordnet ist, wobei insbesondere die erste Applikationseinrichtung sich parallel der Haupt-Querachse des Rotors erstreckt. Weiterbildungen sehen darüber hinaus vor, dass die erste Applikationseinrichtung Ausbringelemente mit Applikationsöffnungen zum Ausbringen, wie Aussprühen des Ausbringguts aufweist, wobei die Applikationsöffnungen insbesondere nach oben und/oder nach unten gebildet sind, wobei insbesondere Applikationselemente sich auf der axialen Höhe der ersten Bereiche befinden.

Weiter kann vorgesehen sein, dass sich auf der dem Rotor abgewandten Seite der ersten Applikationseinrichtung mindestens eine zweite Applikationseinrichtung befindet. Der zweite Applikationsbalken kann dann ebenfalls Ausbringelemente auf axialer Höhe der ersten Bereiche aufweisen.

In Weiterbildung kann eine weitere Applikationseinrichtung vorzugsweise in Form eines Applikationsbalkens, auf der dem Rotor abgewandten Seite der Kanäle vorgesehen sein, wobei die auf der dem Rotor abgewandte Seite der Kanäle angeordnete Applikationseinrichtung Applikationselemente auf axialer Höhe der zweiten Bereiche aufweist. Auch ist bevorzugt vorgesehen, dass die Applikationselemente mit ihrer Ausbringöffnung um eine parallel zur Haupt-Querachse verlaufende Achse verschwenkbar angeordnet sind und/oder mit einer Radialkomponente zum Rotor verschiebbar sind. Diese Applikationseinrichtungen sind vorzugsweise als Bandspritzeinrichtung mit Düsen in dem zweiten axialen Bereich ausgebildet.

Zum Aufbringen von Flüssigkeit zeichnet sich die erfindungsgemäße Vorrichtung in bevorzugter Ausgestaltung dadurch aus, dass die Applikationselemente als Düsen ausgebildet sind. Durch die Applikationsbalken mit ihren Applikationselementen können unterschiedliche, feste, körnige oder flüssige Stoffe und Materialien im ersten axialen Bereich auf den Boden aufgebracht werden, wie flüssiger und/oder fester körniger Dünger, aber auch Pilzkulturen oder andere Kulturen, wie natürliche Bakterienstämme oder Rotte- und/oder Umsetzungshilfsstoffe in flüssiger und/oder fester, wie körniger Form und Zusammensetzung oder dgl., wodurch im letzten Fall das abgelegte Mulchmaterial durch Pilz- oder Bakterienkulturen geimpft wird. Hierdurch kann der Rotte- und Umsetzungsprozess des Mulchmaterials bzw. der abgelegten Biomasse gesteuert, nämlich beschleunigt oder verlangsamt und darüber hinaus die Mulchmasse selbst in geeigneter Weise hygienisiert werden.

In bevorzugter Weiterbildung des erfindungsgemäßen Verfahrens ist vorgesehen, dass die Grün- oder Biomasse als Mulchgut auf bereits vorher auf dem Boden ausgebrachtes flüssiges oder körniges Ausbringgut aufgebracht wird oder aber dass das flüssige oder körnige Ausbringgut auf vorher als Mulchgut abgelegte Grünmasse aufgebracht wird.

Das Verfahren kann, wie schon vorstehend angedeutet, darüber hinaus beinhalten, dass als körniges und/oder flüssiges Ausbringgut flüssiger oder körniger Dünger, Pestizide, Pilze oder dgl. ausgebracht werden.

Die erfindungsgemäße Vorrichtung kann weitere Aggregate für die Anlage von Saatstreifen, wie Reihenfräsen, Spezial-Reihengrubber, Reihenhacken, Räumschare o.ä. sowie Zusatzelemente vor oder nach dem Mulcherrotor innerhalb der Saatreihen-Kanäle zur Anlage von Saatreihen, Hackstriegel- oder andere Hackelemente für die Pflege der Saatreihen mit flachem, leichtem Bodeneingriff zur Entfernung der in den Saatreihen aufgehenden Unkräuter und Ungräser ebenfalls vor oder nach dem Mulchrotor innerhalb der Saatreihen-Kanäle aufweisen, um diese Arbeiten auch in einem Arbeitsgang während der Reihen-Mulcharbeiten durchzuführen.

Weitere Vorteile und Merkmale der Erfindung ergeben sich aus den Ansprüchen und aus der nachfolgenden Beschreibung, in der Ausführungsbeispiele der Erfindung unter Bezugnahme auf die Zeichnungen im Einzelnen erläutert sind. Dabei zeigt:
- Fig. 1: eine perspektivische Draufsicht auf die erfindungsgemäße Vorrichtung (Außenansicht;
- Fig. 2: eine Seitenansicht der erfindungsgemäßen Vorrichtung;
- Fig. 3: einen Schnitt durch wesentliche Teile der Vorrichtung senkrecht zur Rotor-Achse A;
- Fig. 4: eine Sicht auf die Vorderseite der erfindungsgemäßen Vorrichtung;
- Fig. 5: eine Rückansicht der erfindungsgemäßen Vorrichtung;
- Fig. 6: eine Unteransicht der erfindungsgemäßen Vorrichtung;
- Fig. 7: eine Seitenansicht in Richtung seiner Haupt-Querachse auf den Rotor der erfindungsgemäßen Vorrichtung;
- Fig. 8: eine Draufsicht auf den Rotor der erfindungsgemäßen Vorrichtung senkrecht zu seiner Haupt-Querachse;
- Fig. 9: eine perspektivische Ansicht eines Reihenkanals der erfindungsgemäßen Vorrichtung;
- Fig. 9a: eine Sicht auf die Vorderseite des Reihenkanals;
- Fig. 9b: eine Seitenansicht des Reihenkanals der Fig. 8,
- Fig. 9c: eine Draufsicht von oben auf den Reihenkanal der Fig. 8, 9;
- Fig. 10: eine Applikationseinrichtung der erfindungsgemäßen Vorrichtung mit Applikationsbalken/Sprüheinrichtung;
- Fig. 11: eine Detailansicht zweier unmittelbar benachbarter Applikationseinrichtungen entsprechend der Fig. 10 im Einbauzustand;
- Fig. 11a: den Gegenstand der Fig. 11 mit Darstellung mehrerer Applikationselemente nebeneinander;
- Fig. 12-12b: Darstellungen zu verschiedenen Ausrichtungen der Düsen der Applikationseinrichtung nach Fig. 10 und 11;
- Fig. 13: die Anordnung einer Applikationseinrichtung/Applikationsbalken zur Applikation von Medien auf die Kulturpflanzen unter den durch die Kanäle geschützten Reihen;
- Fig. 14: eine vergrößerte Einzeldarstellung der Applikationseinrichtung der Fig. 13;
- Fig. 15: eine Stirnansicht auf Kanäle mit in deren Oberseite integrierten Applikationselementen; und
- Fig. 16: eine Sicht von unten auf die Kanäle der Fig. 15.

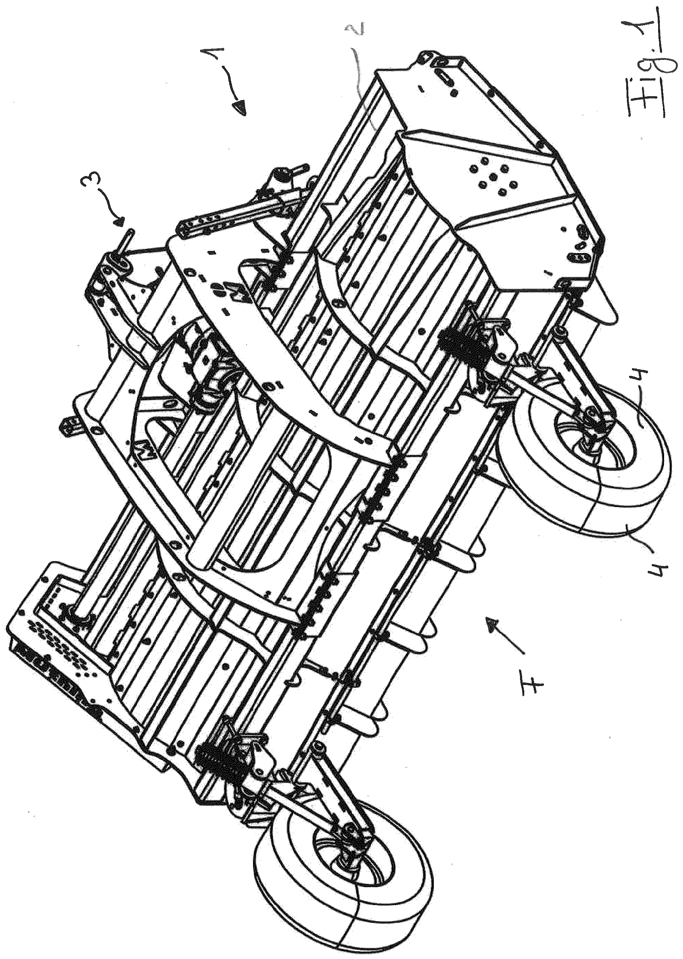

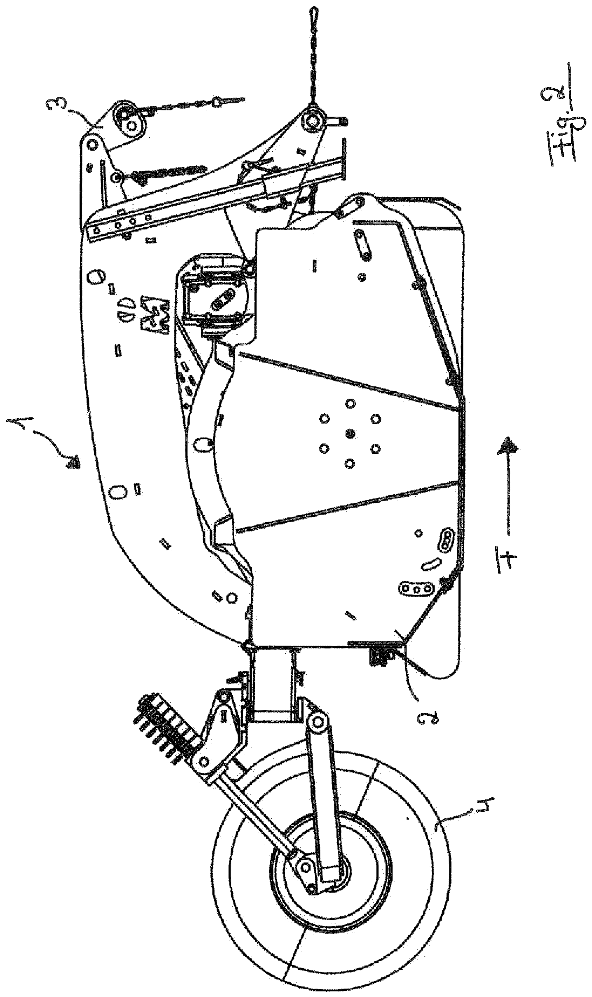

Die Fig. 1 zeigt die Außenansicht einer erfindungsgemäßen Vorrichtung 1 zur land- oder forstwirtschaftlichen Bearbeitung von Bodenbewuchs mit einem Funktionselemente umgebenden Gehäuse 2, einer Befestigungseinrichtung 3 zur Verbindung der erfindungsgemäßen Vorrichtung 1 mit einer Zugvorrichtung, wie einem Traktor, und mit Rädern 4 am in Fahrtrichtung F rückwärtigen Ende des Gehäuses 2. Die genannten Teile sind der Seitenansicht der Fig. 2 in gleicher Weise zu entnehmen.

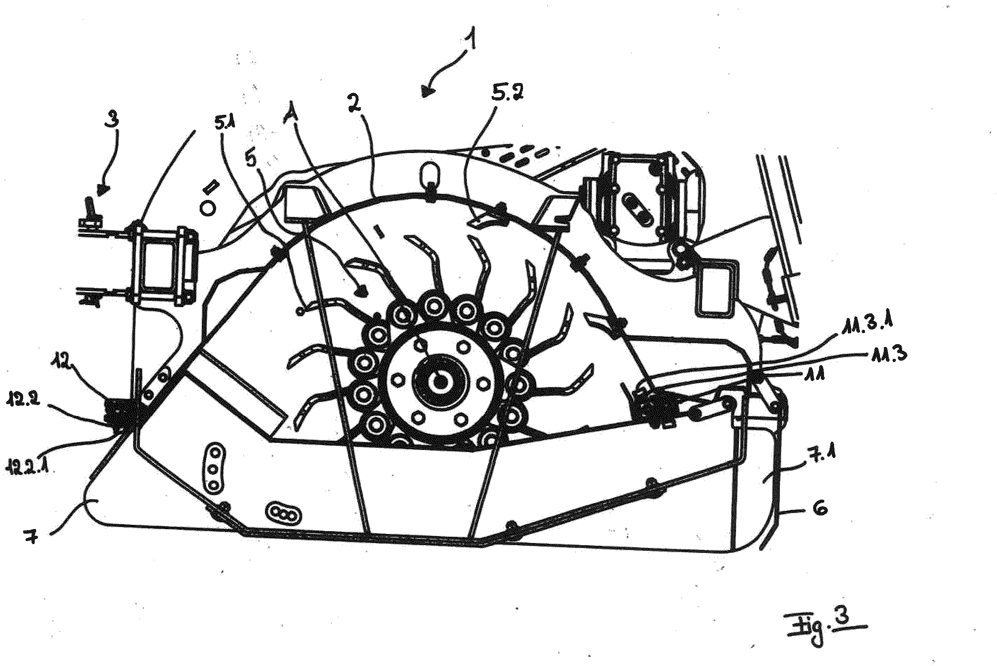

Die Fig. 3 zeigt die wesentlichen Teile der erfindungsgemäßen Vorrichtung 1 im Längsschnitt senkrecht zur Haupt-Querachse A. Im Gehäuse 2 findet sich der Rotor 5 mit seinen Trennwerkzeugen in Form von Schlegeln 5.1. Diesen sind am Innenumfang des Gehäuses 2 gehäusefeste Gegenschneiden 5.2 zugeordnet, die zusammen mit den Trennwerkzeugen eine weitere Zerkleinerung des Mulchguts bewirken.

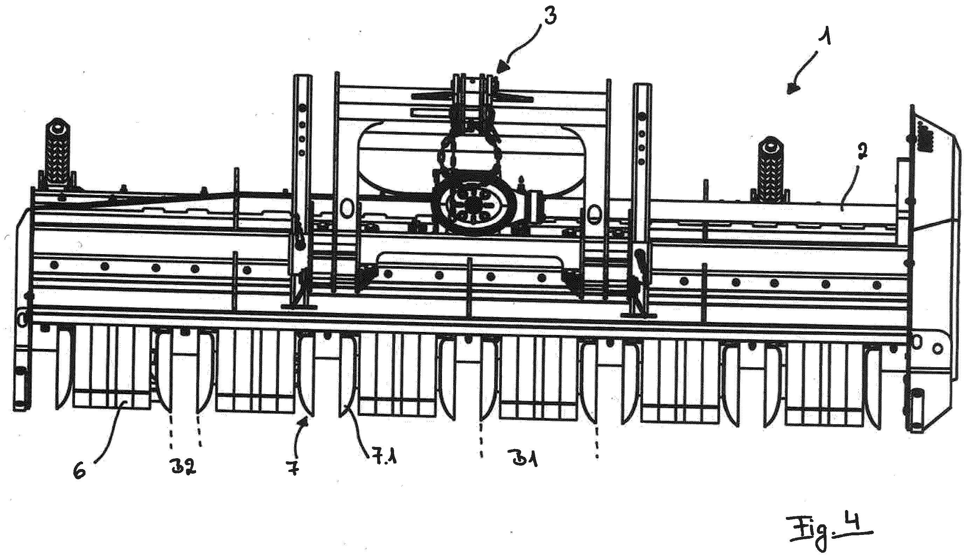

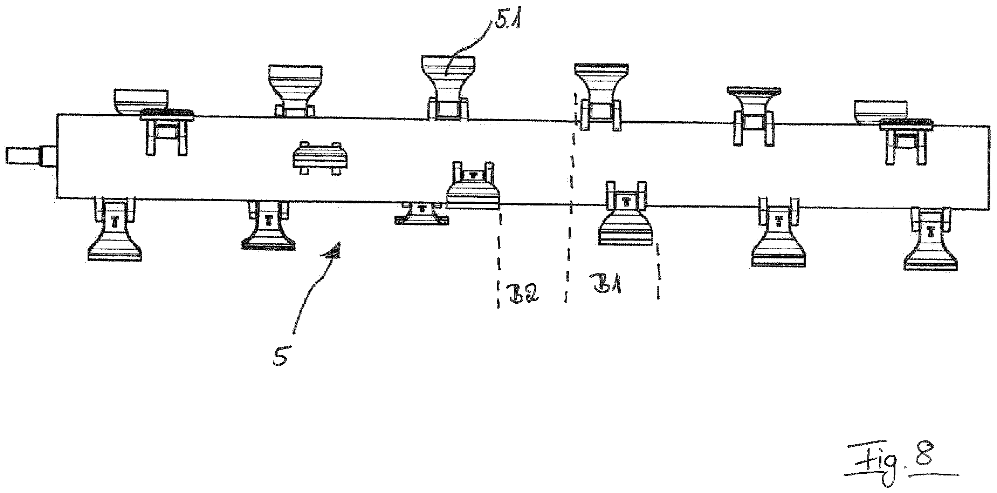

In Fahrtrichtung vor dem Rotor 5 ist eine erste Applikationseinrichtung 11 angeordnet, die nach oben gerichtete Applikationselemente 11.3 mit ebenfalls nach oben gerichteten Austrittsöffnungen 11.3.1 aufweist. Entlang der Achse A, d.h. über die Breite des Rotors 5 sind die ersten Applikationseinrichtungen 11 derart angeordnet, dass sie die von ihnen applizierten oder ausgebrachten Stoffe im ersten Bereich B1 ausbringen (Fig. 4, 8). Diese dienen vorzugsweise dazu das Mulchgut mit - flüssigen - Pflanzenschutzmitteln zu besprühen, um so die Entwicklung und Ausbreitung von Schädlingen in diesem zu unterdrücken.

In gleicher Weise kann eine erste Applikationseinrichtung 11 auch mit nach unten gerichteten Applikationselementen 11.3 vorgesehen sein, um flüssige oder feste, insbesondere körnige Stoffe direkt nach unten auf die Bodenfläche auszubringen. In diesem Falle ist die erste Applikationseinrichtung 11 dann in Fahrtrichtung hinter dem Rotor 5 angeordnet, wobei der Auswurf des Rotors derart sein kann, dass er das Mulchgut vor der ersten Applikationseinrichtung 11 ablegt, so dass diese den entsprechenden Stoff auf dem Mulchgut aufbringt. Alternativ kann die Anordnung auch derart sein, dass der Rotor 5 das Mulchgut über die erste Applikationseinrichtung 11 hinwegwirft, so dass diese den entsprechenden Stoff zunächst unmittelbar auf die verbliebene Pflanzennarbe aufbringt, auf der dann das Mulchgut abgelegt wird.

Erste Applikationseinrichtungen 11 mit nach unten und nach oben gerichteten Applikationselementen 11.3 können auch in Kombination an einer Vorrichtung vorgesehen sein.

Weiterhin ist in der Fig. 3 eine zweite Applikationseinrichtung 12 in Fahrtrichtung am Ende des Kanals 7 dargestellt, die in Querrichtung oberhalb des Kanals 7 angeordnet ist. Sie weist nach unten gerichtete Applikationselemente 12.2 mit nach unten gerichteten Applikationsöffnungen 12.2.1 auf, die also in den Kanal 7 hinein und auf das durch diesen geführte Kulturgut einen entsprechenden Stoff in fester, wie körniger, oder flüssiger Form applizieren oder ausbringen. Hierbei handelt es sich dann vorzugsweise um das Kulturgut düngenden Dünger.

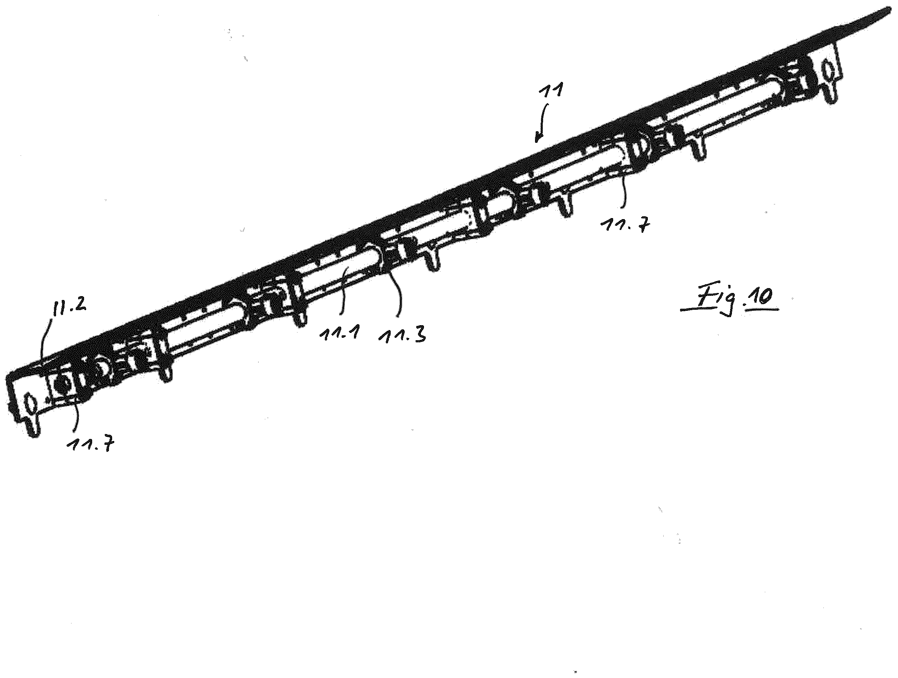

Die Applikationseinrichtungen 11 und 12 sind insbesondere in den Figuren 10ff genauer dargestellt und im Folgenden unter Bezug auf diese Figuren detaillierter beschrieben.

Die Fig. 4 zeigt neben den vorgenannten Teilen den unteren Bereich eines Mulcher-Rotors 5, vor diesem im ersten - mit Schlegel versehenen (nicht sichtbar) - Bereich des Rotors flexible Abdeckungen 6 und zwischen diesen Schutz-Kanäle 7 mit Einlaufschrägen 7.1 in zweiten Axialbereichen in der Erstreckungsrichtung des Rotors 5, die nicht mit Schlegeln versehen sind. Die erfindungsgemäße Vorrichtung 1 fährt so über die zu bearbeitende Fläche, dass die Schutz-Kanäle entlang oder über die Nutzpflanzen geführt werden, während die zwischen diesen angeordneten mit Schlegeln 5.1 versehenen erste Bereiche über zwischen den Reihen der Nutzpflanzen befindlichen Bodenbewuchs in Form von Grüngut zur Bearbeitung desselben, insbesondere zum Mulchen desselben geführt werden.

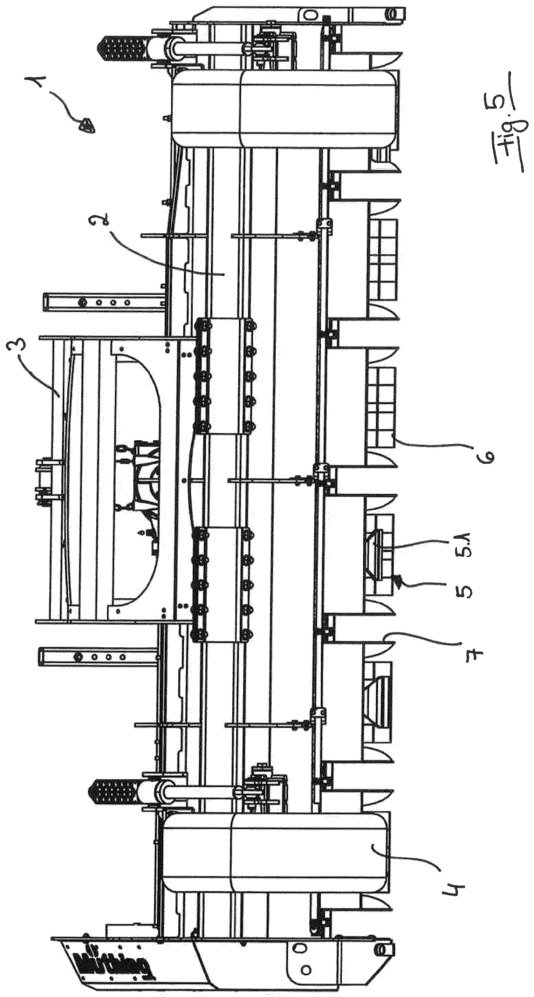

Die Fig. 5 zeigt eine Rückansicht der erfindungsgemäßen Vorrichtung, in der ebenfalls die wesentlichen vorstehend beschriebenen Elemente erkennbar sind.

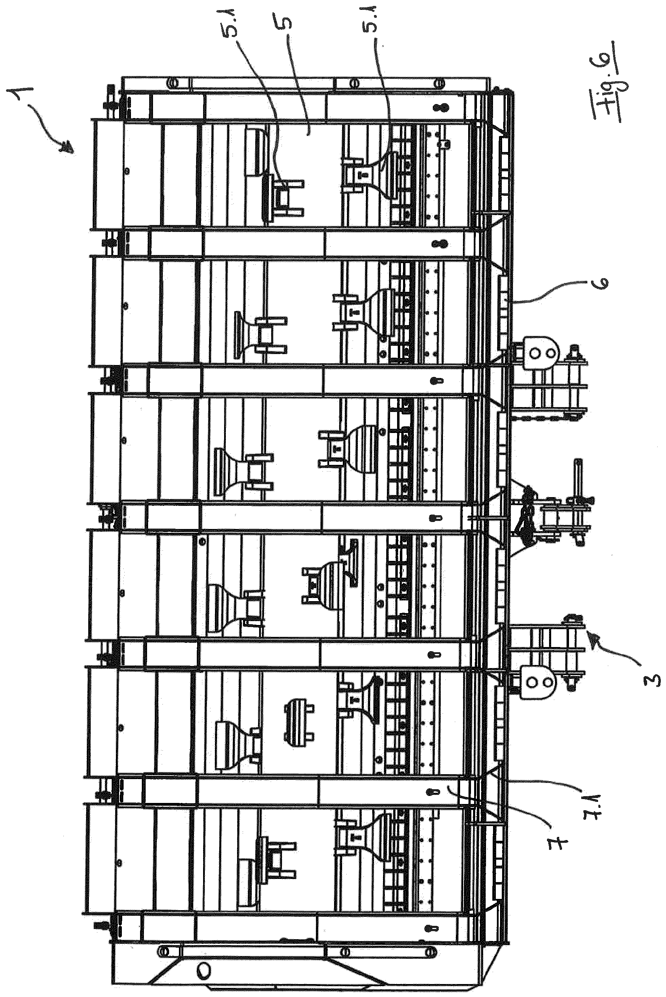

Die Fig. 6 zeigt die Unteransicht der erfindungsgemäßen Vorrichtung ebenfalls mit den wesentlichen vorstehend beschriebenen Elementen. Darüber hinaus sind Schlegel 5.1 am Rotor 5 außerhalb der Kanäle 7 bzw. in nicht abgedeckten ersten Bereichen des Rotors 5 außerhalb der Kanäle 7 dargestellt.

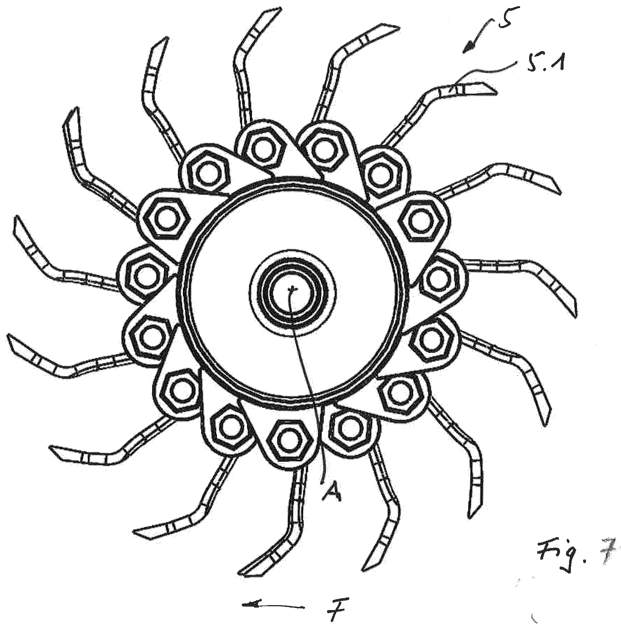

Eine Seitenansicht des Rotors 5 findet sich in der Fig. 7, während die Fig. 8 eine Draufsicht senkrecht zur Quer-Hauptachse A des Rotors 5 zeigt. Aus der Fig. 8 ist erkennbar, dass neben ersten sich in Längsrichtung der Haupt-Querachse A erstreckenden Bereichen B1, in denen die über den Umfang des Rotors 4 angeordneten Schlegel 5.1 sich in der Längsrichtung der Achse A überlappen, Bereiche B2 des Rotors vorhanden sind, die von Schlegeln 5.1 frei sind. Unterhalb dieser sind im zusammengebauten Zustand der Vorrichtung die Schutz-Kanäle 7 angeordnet.

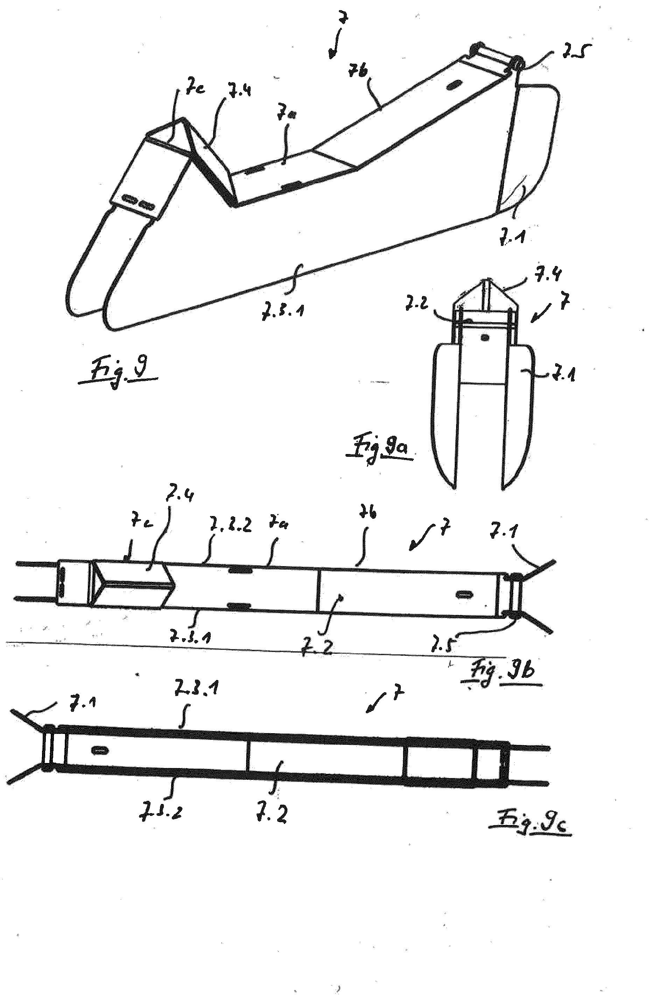

Eine bevorzugte Ausführungsform eines solchen Schutz-Kanals ist in der Fig. 9 perspektivisch dargestellt. Der Kanal 7 weist eine geschlossene Oberseite 7.2 und zwei Seitenwandungen 7.3.1 und 7.3.2 auf, die an den seitlichen Kanten der Oberseite 7.2 angeordnet sind und mit Abstand parallel zueinander verlaufen sowie sich nach unten erstrecken. Sowohl an der vorderen und der rückwärtigen Stirnseite als auch an der Unterseite ist der Kanal 7 offen. Vom vorderen Ende der Wandungen 7.3.1, 7.3.2 erstrecken sich zu ihren freien Ende senkrecht nach außen verlaufende oder sich erweiternde Schutzbleche 7.1.

In seiner Längserstreckung weist der Kanal 7 drei Bereiche auf. Zunächst einen mittleren Bereich 7a und beidseitig desselben einen vorderen Bereich 7b und einen rückwärtigen Bereich 7c. Die Oberseite 7.2 verläuft vom mittleren Bereich 7a sowohl im vorderen Bereich 7b als auch im rückwärtigen Bereich 7c nach oben, so dass sich die Höhe des Kanals zu seinen beiden Enden hin kontinuierlich vergrößert, wie dies in der Fig. 9 dargestellt ist. Im vorderen Bereich führt dies dazu, dass beim Fahren des Kanals 7 über die Nutzpflanzen hin diese, falls sie die Höhe des Kanals übersteigen, sanft abgebogen und in diesen eingeführt werden, während die Schräge der Oberseite im rückwärtigen Bereich dazu dient, dort von den Schlegeln aufgeworfenes Mulchgut wieder auf den Boden zurückzuführen.

In seinem vorderen Bereich (am stirnseitigen Ende des Abschnitts 7b) ist der Kanal mit einer Pendelachse 7.5 versehen, mit der er am Gehäuse und damit vorrichtungs- bzw. fahrzeugfest an der Vorrichtung angelenkt werden kann, während sein rückwärtiges Ende (Abschnitt 7c) beim Verfahren auf dem Boden aufliegt und über diesen verfahren wird und dabei den Unebenheiten des Bodens folgen kann.

Die Abdeckung des Kanals dient darüber hinaus dazu, den Kontakt des Nutzguts der Reihenkultur mit im Mulchbereich (Bereich 2) applizierten Medien, wie Flüssigkeiten, zu vermeiden.

Die Fig. 10 zeigt die erste Applikationseinrichtung 11 der Fig. 3 als solche zum Ausbringen insbesondere von Flüssigkeiten im Bereich zwischen den Kanälen 7 und damit in den Trennwerkzeugen 5.2.1 aufweisenden Bereichen B1 des Rotors 5. Die Applikationsöffnungen 11.3.1 (Düsenöffnungen) der Ausbringelemente 11.3 (Applikationsdüsen) sind entsprechend der Ausrichtung der Fig. 3 nach oben, vom Boden weg, dargestellt. Sie können aber, wie gesagt, auch nach unten hin und im Wesentlichen horizontal gegen eine Prallwand gebildet sein. Dann sind sie regelmäßig - in Fahrtrichtung - hinter dem Rotor 5 angeordnet. Sie sprühen dann - im Einsatz - Stoffe auf die durch die Trennwerkzeuge 5.1 vorher gekürzte Grün- und Biomasse zwischen den Kulturpflanzen.

Die Applikationseinrichtung 11 weist ein sich entlang ihrer Länge und - nach Einbau in die erfindungsgemäße Vorrichtung quer zu dieser und parallel zur Achse A des Rotors 5 erstreckendes Applikationsrohr 11.1 auf, das an einer winkelförmigen Halterung 11.2 befestigt ist. Das Applikationsrohr 11.1 hat, im Einbauzustand, hier im Wesentlichen nach oben gerichtete Auslass- oder Applikationselemente 11.3 in Form von Düsen. Diese weisen an ihrem freien Ende Applikationsöffnungen 11.3.1 auf.

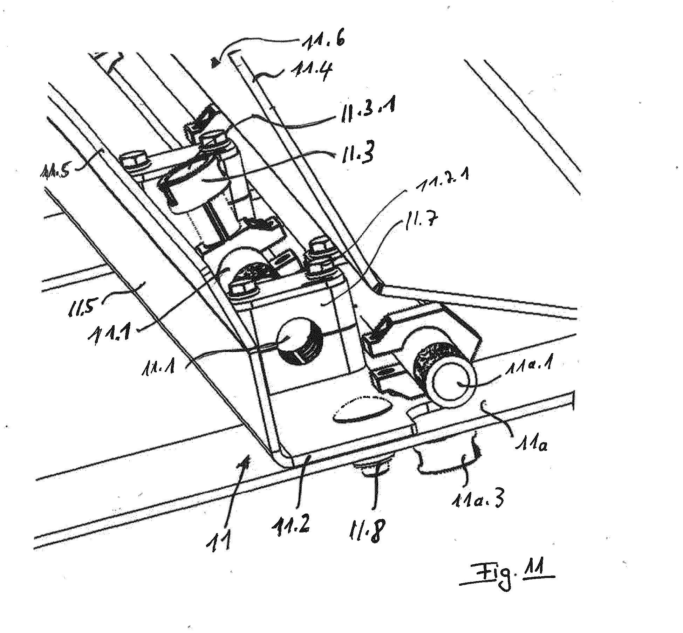

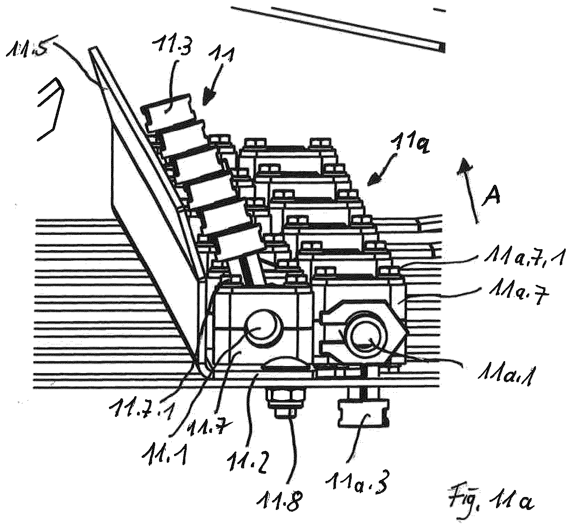

In der Fig. 11 ist die Applikationseinrichtung 11 in Teildarstellung im Einbauzustand dargestellt, wobei die vorgenannten Merkmale winkelförmige Halterung 11.2, Applikationsrohr 11.1 und Applikationselemente 11.3 erkennbar sind.

Durch Wände 11.4 und 11.5 wird ein sich über die Breite der Vorrichtung erstreckender Applikationsschacht 11.6 begrenzt. Unmittelbar neben der Applikationseinrichtung 11 ist eine zweite Applikationseinrichtung 11a angeordnet, deren Applikationselemente 11a.3 in Form von Düsen entgegen den Applikationselementen 11.3 gerichtet sind und im Übrigen derart in Richtung der Haupt-Querachse A versetzt angeordnet sein können, dass die Applikationselemente 11.3 im Bereich B1 und die Applikationselemente 11a.3 im Bereich B2 angeordnet sind oder vice versa.

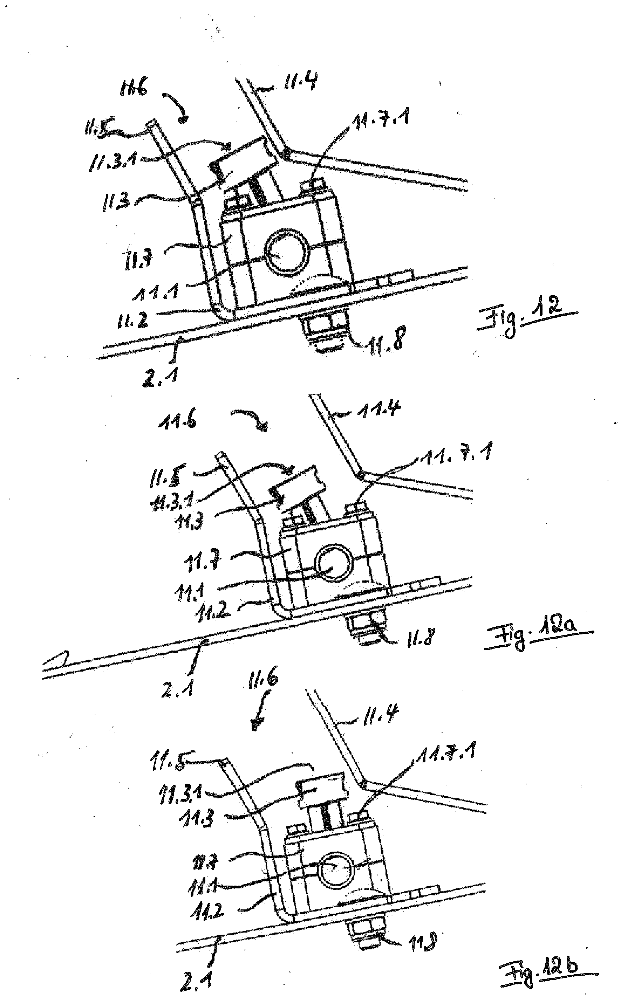

Das Applikationsrohr 11.1 mit den Applikationselementen 11.3 ist über Klemmblöcke 11.7 mittels einer SchraubenMutter-Einheit 11.8 zusammen mit der winkelförmigen Halterung 11.2 an einem Gehäuseteil 2.1 des Gehäuses 2 der erfindungsgemäßen Vorrichtung 1 festgelegt (auch Fig. 12 bis 12b). Die Klemmblöcke 11.7 bestehen aus zwei Hälften, die mittels Schrauben 11.7.1 unter Festspannung des Applikationsrohrs 11.1 zwischen diesen miteinander verspannbar sind.

Diese Konstruktion ermöglicht nach Lösen der Schrauben das Verschwenken des Applikationsrohrs 11.1 in den Klemmblöcken 11.7 und damit eine unterschiedliche Winkelausrichtung der Applikationsdüsen 11.3, wie ein Vergleich der Figuren 12a und 12b zeigt.

Darüber hinaus befindet sich im Gehäuseteil 2.1 quer zur Erstreckungsrichtung der Applikationseinrichtung 11 bzw. des Applikationsrohres 11.1 ein Langloch (nicht dargestellt), in dem die Applikationseinrichtung 11 in oder entgegen der Fahrtrichtung F nach Lösen der Schrauben-Mutter-Einheit 11.8 verschiebbar ist, wie ein Vergleich der Positionen der Applikationseinrichtung 11 der Fig. 12 und 12a zeigt.

In der Fig. 11a ist der Gegenstand der Fig. 11 teils auszugsweise in der Tiefe, aber mit mehreren Applikationselementen 11.3 und 11a.3 dargestellt, wobei die mehreren Applikationselemente 11.3 als solche, zu den ebenfalls mehreren Applikationselementen 11a.3 neben der Stirnseite des Verbindungsrohrs 11a.1 deren Klemmblöcke 11a.7 mit Verbindungsschrauben 11a.7.1 sichtbar sind.

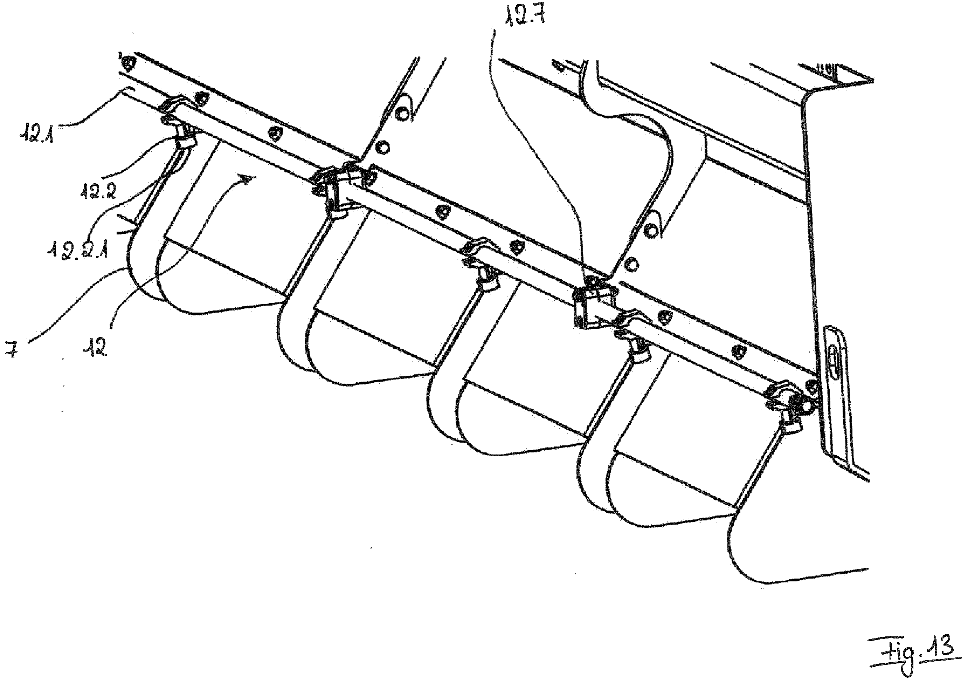

Die Fig. 13 zeigt eine weitere Applikationseinrichtung 12 oberhalb der Kanäle 7 hinter deren - in Fahrtrichtung - rückwärtigen Bereich. Auch diese Applikationseinrichtung 12 weist ein sich quer zur Vorrichtung über die nebeneinander angeordneten Kanäle 7 hingerichtetes Applikationsrohr 12.1 mit im Wesentlichen nach unten gerichteten Applikationselementen 12.2 (Düsen) auf, die damit ebenfalls zur Applikation von Flüssigkeiten, aber diesmal in die Kanäle 7 und diese überfahrenen Kulturpflanzen versehen ist. Diese weisen an ihrem freien Ende Ausbringöffnungen 12.2.1 auf. Diese Applikationseinrichtung ist vorzugsweise als Bandspritzeinrichtung mit Düsen in den zweiten Bereichen B2 ausgebildet.

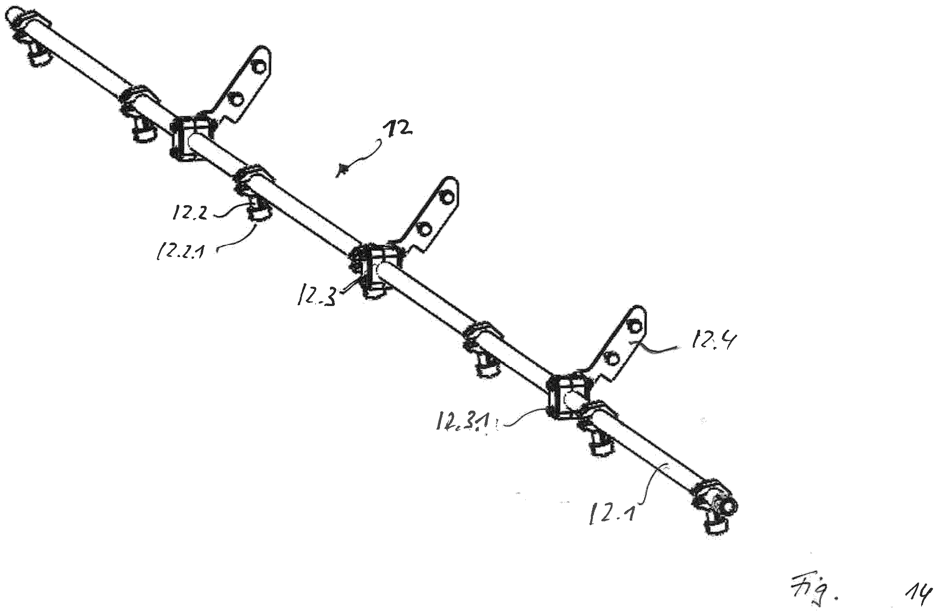

Die Applikationseinrichtung 12 ist in der Fig. 14 alleine und detaillierter dargestellt. Sie weist Halterungen 12.3 auf, mittels derer die Applikationseinrichtung 12 am Gehäuse 2 der Vorrichtung 1 festlegbar ist. Das Applikationsrohr 12.1 wird wiederum in einem Klemmblock 12.4 geklemmt gehalten, der ebenso wie der Klemmblock 12.4 ausgebildet ist und dessen beiden Hälften durch Schrauben 12.4.1 zur Festlegung des Applikationsrohrs 12.1 bei einer gewünschten Ausrichtung gegeneinander verspannbar sind. Zur Vermeidung von Wiederholungen wird insofern vollständig auf die detailliertere vorstehende Beschreibung zur Applikationseinrichtung 11 verwiesen, die hinsichtlich der Klemmung und Ausrichtung des Applikationsrohrs 12.1 und dessen Applikationselemente 12.2 in gleicher Weise vollständig gilt. Entsprechendes gilt für die Verschiebbarkeit der Applikationseinrichtung 12 in oder entgegen der Fahrtrichtung.

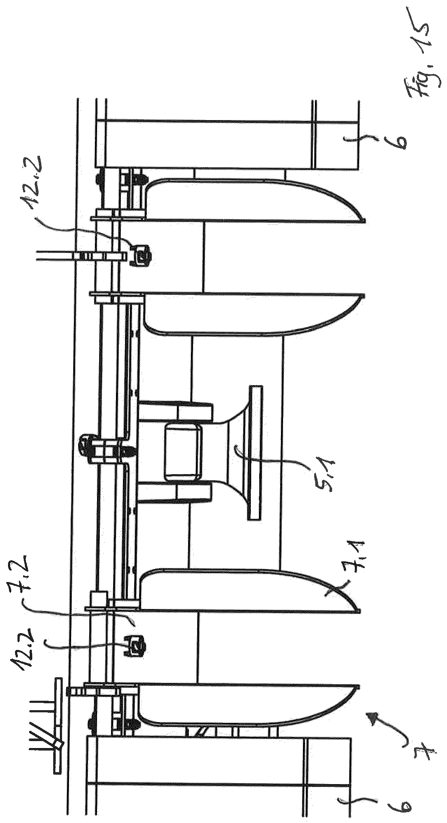

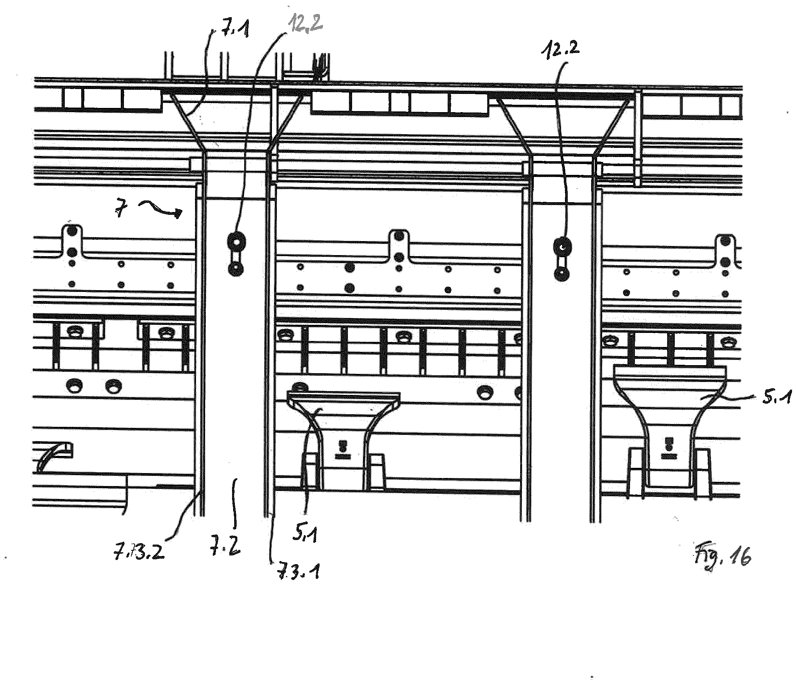

Während bei der Ausgestaltung der Fig. 13 und 14 die Applikationselemente gemeinsam an einem starren Applikationsrohr angebracht und in Fahrtrichtung hinter den Kanälen 7 angeordnet sind, sind die weiteren Applikationselemente 12.2 zur Applikation von Medium oder Fluid auf die durch die Kanäle 7 geführten Kulturpflanzen fest mit den Kanälen 7 verbunden, insbesondere, wie dargestellt, in deren Oberseite 7.2 integriert. Da, wie weiter oben ausgeführt, die Kanäle 7 an ihrer Vorder- oder Einlassseite schwenkbar gelagert sind und damit entsprechend der Kontur des Bodens, auf dem sie aufliegen, schwenken können, sind die Applikationselemente 12.2 der Ausgestaltung der Fig. 15 und 16 nicht an einem starren Rohr befestigt, sondern individuell über Schlauchleitungen (nicht dargestellt) mit einem Versorgungsbehälter verbunden.

## Patentansprüche

1. Vorrichtung zur Bearbeitung von Bodenbewuchs, mit einer Mulcheinrichtung, die einen Rotor (5) hat, der Trennwerkzeuge (5.1) in ersten Bereichen (B1) aufweist und sich entlang seiner Haupt-Querachse A erstreckende zweite Bereiche (B2) aufweist, in denen über den gesamten Umfang des Rotors (5) keine Trennwerkzeuge (5.1) angeordnet sind, wobei unterhalb der zweiten Bereiche (B2) des Rotors (5) nach unten offene Kanäle (7) sich senkrecht zur Erstreckungsrichtung der Haupt-Querachse A erstreckend angeordnet sind, die sich von oben nach unten erstreckende, mit Abstand parallel zueinander verlaufende Seitenwände (7.3.1, 7.3.2) und eine geschlossene Oberseite (7.2) haben.

2. Vorrichtung nach Anspruch 1, **dadurch gekennzeichnet, dass** die Trennwerkzeuge zum Abtrennen von ersten Pflanzenteilen von mit dem Boden weiterhin verbunden bleibenden zweiten Pflanzenteilen ausgebildete Trennwerkzeuge sind.

3. Vorrichtung nach Anspruch 1 oder 2, **dadurch gekennzeichnet, dass** über den Umfang des Rotors (5) hin in den ersten Bereichen (B1) angeordnete Trennwerkzeuge (5.1) sich in Richtung der Haupt-Querachse überlappen.

4. Vorrichtung nach einem der Ansprüche 1 bis 3, **dadurch gekennzeichnet, dass** die Trennwerkzeuge schwenkbar mit dem Rotor verbundene Schlegel und/oder Trennmesser sind.

5. Vorrichtung nach einem der vorangehenden Ansprüche, **dadurch gekennzeichnet, dass** die Kanäle in ihrem vorderen Bereich (7b) an einer parallel zur Haupt-Querachse verlaufenden vorrichtungsfesten Schwenkachse (7.5) angelenkt sind.

6. Vorrichtung nach einem der vorangehenden Ansprüche, **dadurch gekennzeichnet, dass** unmittelbar vor und/oder hinter dem Rotor (5) mindestens eine Applikationseinrichtung (11,12) angeordnet ist.

7. Vorrichtung nach Anspruch 6, **dadurch gekennzeichnet, dass** die Applikationseinrichtung (11,12) sich parallel der Haupt-Querachse (A) des Rotors (5) erstreckt.

8. Vorrichtung nach einem der Ansprüche 6 oder 7, **dadurch gekennzeichnet, dass** die Applikationseinrichtung (11,12) Ausbringelemente (11.2,12.2) mit Applikationsöffnungen (11.2.1,12.2.1) zum Ausbringen oder Aussprühen des Ausbringguts aufweist.

9. Vorrichtung nach einem der Ansprüche 6 bis 8, **dadurch gekennzeichnet, dass** Applikationselemente (11.2) einer ersten Applikationseinrichtung (11) sich auf der axialen Höhe der ersten Bereiche (B1) befinden.

10. Vorrichtung nach einem der Ansprüche 6 bis 9, **gekennzeichnet durch** eine Applikationseinrichtung (12) als weitere Applikationseinrichtung mit Applikationselementen (12.2) auf axialer Höhe der zweiten Bereiche (B2).

11. Vorrichtung nach Anspruch 10, **dadurch gekennzeichnet, dass** die weitere Applikationseinrichtung (12) in Form eines Applikationsbalkens auf der dem Rotor (5) abgewandten Seite der Kanäle (7) angeordnet ist.

12. Vorrichtung nach Anspruch 10 oder 11, **dadurch gekennzeichnet, dass** die weitere Applikationseinrichtung (12) durch an den Kanälen (7) befestigte, ins Innere derselben reichende Applikationselemente (12.2) gebildet ist.

13. Vorrichtung nach einem der Ansprüche 10 bis 12, **dadurch gekennzeichnet, dass** die Applikationselemente (12.2) der zweiten Applikationseinrichtung über flexible Schlauchleitungen mit mindestens einem Versorgungsbehälter verbunden sind.

14. Verfahren zum Bearbeiten von Bodenbewuchs mit Mulchen, wobei eine Vorrichtung zur Bearbeitung von Bodenbewuchs mit einer Mulcheinrichtung über den den Bewuchs tragenden Boden verfahren wird, die Rotor (5) mit Trennwerkzeugen (5.1) in ersten Bereichen (B1) und mit sich entlang seiner Haupt-Querachse A erstreckenden zweiten Bereichen (B2) aufweist, in denen über den gesamten Umfang des Rotors (5) keine Trennwerkzeuge angeordnet sind, mit unterhalb der zweiten Bereiche (B2) des Rotors (5) nach unten offenen sich senkrecht zur Erstreckungsrichtung der Haupt-Querachse A gerichteten Kanälen (7), die von oben nach unten gerichtete, mit Abstand parallel zueinander verlaufende Seitenwände (7.3.1,7.3.2) und eine geschlossene Oberseite (7.2) haben, und wobei in voneinander beabstandeten Reihen in einer einheitlichen Arbeitsfolge flüssiges und/oder festes Ausbringgut auf dem Boden aufgebracht und vom Boden getrennte Grün- oder Biomasse unmittelbar als zerkleinertes Mulchgut auf auf dem Boden ausgebrachtes Ausbringgut aufgebracht wird.

15. Verfahren nach Anspruch 14, **dadurch gekennzeichnet, dass** als Ausbringgut flüssiger oder körniger Dünger, chemische Pflanzenschutzmittel, Pilz- und/oder Bakterienkulturen ausgebracht werden.

## Claims

1. Apparatus for processing ground vegetation, comprising a mulching device which has a rotor (5) which has separating tools (5.1) in first regions (B1) and has second regions (B2) extending along its main transverse axis A, in which second regions no separating tools (5.1) are arranged over the entire circumference of the rotor (5), wherein downwardly open channels (7) are arranged below the second regions (B2) of the rotor (5) so as to extend perpendicularly to the direction of extension of the main transverse axis A, which channels have side walls (7.3.1, 7.3.2) extending from top to bottom and running in parallel with one another at a distance and a closed upper side (7.2).

2. Apparatus according to claim 1, **characterized in that** the separating tools are designed to separate first plant parts from second plant parts that remain connected to the ground.

3. Apparatus according to claim 1 or 2, **characterized in that** separating tools (5.1) arranged over the circumference of the rotor (5) in the first regions (B1) overlap in the direction of the main transverse axis.

4. Apparatus according to any of claims 1 to 3, **characterized in that** the separating tools are flails and/or cutting knives pivotably connected to the rotor.

5. Apparatus according to any of the preceding claims, **characterized in that** the channels are hinged in their front region (7b) to a pivot axis (7.5) fixed to the apparatus and running in parallel with the main transverse axis.

6. Apparatus according to any of the preceding claims, **characterized in that** at least one application device (11,12) is arranged directly in front of and/or behind the rotor (5).

7. Apparatus according to claim 6, **characterized in that** the application device (11,12) extends in parallel with the main transverse axis (A) of the rotor (5).

8. Apparatus according to one of claims 6 or 7, **characterized in that** the application device (11,12) has application elements (11.2,12.2) having application openings (11.2.1,12.2.1) for applying or spraying the application material.

9. Apparatus according to any of claims 6 to 8, **characterized in that** application elements (11.2) of a first application device (11) are located at the axial height of the first regions (B1).

10. Apparatus according to any of claims 6 to 9, **characterized by** an application device (12) as a further application device having application elements (12.2) at the axial height of the second regions (B2).

11. Apparatus according to claim 10, **characterized in that** the further application device (12) is arranged in the form of an application bar on the side of the channels (7) that faces away from the rotor (5).

12. Apparatus according to claim 10 or 11, **characterized in that** the further application device (12) is formed by application elements (12.2) attached to the channels (7) and extending into the interior thereof.

13. Apparatus according to any of claims 10 to 12, **characterized in that** the application elements (12.2) of the second application device are connected to at least one supply container via flexible hose lines.

14. Method for processing ground vegetation by mulching, wherein an apparatus for processing ground vegetation comprising a mulching device is moved over the ground supporting the vegetation, which device has a rotor (5) having separating tools (5.1) in first regions (B1) and having second regions (B2) extending along its main transverse axis A, in which no separating tools are arranged over the entire circumference of the rotor (5), having channels (7) opening downwardly below the second regions (B2) of the rotor (5) and directed perpendicularly to the direction of extension of the main transverse axis A, which channels have side walls (7.3.1,7.3.2) directed from top to bottom and running in parallel with one another at a distance and a closed upper side (7.2), and wherein liquid and/or solid application material is applied to the ground in spaced-apart rows in a uniform working sequence and green material or biomass separated from the ground is applied directly as shredded mulch to application material applied to the ground.

15. Method according to claim 14, **characterized in that** liquid or granular fertilizers, chemical pesticides, fungal and/or bacterial cultures are applied as an application material.

## Revendications

1. Dispositif pour le traitement de végétation au sol, comportant un appareil de paillage possédant un rotor (5) présentant des outils de séparation (5.1) dans de premières zones (B1) et présentant de secondes zones (B2) s'étendant le long de son axe transversal principal A, secondes zones dans lesquelles aucun outil de séparation (5.1) n'est disposé sur toute la circonférence du rotor (5), dans lequel des canaux (7) ouverts vers le bas sont disposés sous les secondes zones (B2) du rotor (5) en s'étendant perpendiculairement à la direction d'extension de l'axe transversal principal A, lesquels canaux possèdent des parois latérales (7.3.1, 7.3.2), s'étendant de haut en bas et s'étendant parallèlement à certaine distance entre elles, et possèdent un côté supérieur fermé (7.2).

2. Dispositif selon la revendication 1, **caractérisé en ce que** les outils de séparation sont des outils de séparation configurés pour séparer de premières parties de plantes de secondes parties de plantes qui restent encore reliées au sol.

3. Dispositif selon la revendication 1 ou 2, **caractérisé en ce que** des outils de séparation (5.1) disposés sur la circonférence du rotor (5) dans les premières zones (B1) se chevauchent en direction de l'axe transversal principal.

4. Dispositif selon l'une des revendications 1 à 3, **caractérisé en ce que** les outils de séparation sont des fléaux et/ou des lames de séparation reliés de manière pivotante au rotor.

5. Dispositif selon l'une des revendications précédentes,
**caractérisé en ce que** les canaux sont articulés dans leur zone avant (7b) sur un axe de pivotement (7.5) solidaire au dispositif et s'étendant parallèlement à l'axe transversal principal.

6. Dispositif selon l'une des revendications précédentes,
**caractérisé en ce qu'**au moins un appareil d'application (11, 12) est disposé directement devant et/ou derrière le rotor (5).

7. Dispositif selon la revendication 6, **caractérisé en ce que** l'appareil d'application (11, 12) s'étend parallèlement à l'axe transversal principal (A) du rotor (5).

8. Dispositif selon l'une des revendications 6 ou 7, **caractérisé en ce que** l'appareil d'application (11, 12) présente des éléments d'épandage (11.2, 12.2) comportant des ouvertures d'application (11.2.1, 12.2.1) pour l'épandage ou la pulvérisation du produit d'épandage.

9. Dispositif selon l'une des revendications 6 à 8, **caractérisé en ce que** des éléments d'application (11.2) d'un premier appareil d'application (11) se situent à la hauteur axiale des premières zones (B1).

10. Dispositif selon l'une des revendications 6 à 9, **caractérisé par** un appareil d'application (12) comme autre appareil d'application comportant des éléments d'application (12.2) à hauteur axiale des secondes zones (B2).

11. Dispositif selon la revendication 10, **caractérisé en ce que** l'autre appareil d'application (12) est disposé sous la forme d'une barre d'application sur le côté des canaux (7) opposé au rotor (5).

12. Dispositif selon la revendication 10 ou 11, **caractérisé en ce que** l'autre appareil d'application (12) est formé par des éléments d'application (12.2) fixés aux canaux (7) et s'étendant à l'intérieur de ceux-ci.

13. Dispositif selon l'une des revendications 10 à 12, **caractérisé en ce que** les éléments d'application (12.2) du second appareil d'application sont reliés à au moins un réservoir d'alimentation par l'intermédiaire de tuyaux flexibles.

14. Procédé pour le traitement de végétation au sol avec paillage, dans lequel un dispositif pour le traitement de végétation au sol est déplacé avec un appareil de paillage sur le sol portant la végétation, lequel appareil de paillage présente un rotor (5) comportant des outils de séparation (5.1) dans de premières zones (B1) et comportant de secondes zones (B2) s'étendant le long de son axe transversal principal A, secondes zones dans lesquelles aucun outil de séparation n'est disposé sur toute la circonférence du rotor (5), comportant des canaux (7) ouverts vers le bas au-dessous des secondes zones (B2) du rotor (5), orientés perpendiculairement à la direction d'extension de l'axe transversal principal A, lesquels canaux possèdent des parois latérales (7.3.1, 7.3.2) orientées de haut en bas et s'étendant parallèlement à une certaine distance les unes des autres et possèdent un côté supérieur fermé (7.2), et dans lequel, dans des rangées espacées les unes des autres, un produit d'épandage liquide et/ou solide est appliqué sur le sol dans une séquence de travail uniforme et de la matière verte ou de la biomasse séparée du sol est appliquée directement sous forme de produit de paillage broyé sur le produit d'épandage appliqué sur le sol.

15. Procédé selon la revendication 14, **caractérisé en ce que** des engrais liquides ou granulaires, des agents phytosanitaires chimiques, des cultures de champignons et/ou de bactéries sont épandus en tant que produit d'épandage.
